# EUROPEAN PATENT SPECIFICATION

(11) **EP 4 133 238 B1**
(45) Date of publication and mention of the grant of the patent: **23.04.2025**
(21) Application number: 21719952.0
(22) Date of filing: 31.03.2021
(51) Int. Cl.: G01F 13/00, G01F 23/2962, G01F 23/80, G01S 7/521, G01S 15/08, B67D 1/12, G01F 17/00, G01F 22/00, G01S 15/88, G01S 15/04, G01F 23/28, G01S 17/88, G01F 23/292

(54) **DISPENSER AND METHOD OF DISPENSING A MATERIAL**
ABGABEVORRICHTUNG UND VERFAHREN ZUR ABGABE EINES STOFFES
DISTRIBUTEUR ET DISPOSITIF DE DISTRIBUTION D'UN MATÉRIAU

(30) Priority: 09.04.2020 GB 202005305; 22.10.2020 GB 202016802; 03.02.2021 GB 202101492
(43) Date of publication of application: 15.02.2023
(60) Divisional application: 25161028.3
(73) Proprietor: Britvic Soft Drinks Limited, Hemel Hempstead, Hertfordshire HP2 4TZ (GB)
(72) Inventor: GLASSTONE, Matthew, London Greater London W1T 2HN (GB); RIDDIFORD, Martin, London Greater London W1T 2HN (GB); MACKENZIE, Scott, Hempstead, Hertfordshire HP2 4TZ (GB)
(74) Representative: Ablett, Graham Keith
(86) International application number: PCT/GB2021/050806
(87) International publication number: WO 2021/205146

(56) References cited:
- CN-A- 106 859 334
- CN-A- 109 527 997
- KR-A- 20180 055 511
- US-A- 4 437 499
- US-A- 5 491 333
- US-A- 5 573 041
- US-A1- 2008 264 092
- US-A1- 2012 138 629
- US-A1- 2017 135 519

## Description

The present invention relates to a dispenser for dispensing a material into a receptable, preferably a beverage, and a method of dispensing a material from a dispenser into a receptacle.

Various types of beverage dispensers are known in the art, for dispensing a variety of different beverages, such as hot and cold beverages, carbonated and non-carbonated beverages, and alcoholic and non-alcoholic beverages.

Beverage dispensers generally comprise a dispenser unit, a support on which a beverage receptacle, such as a glass or cup, can be positioned for receiving a beverage from the dispenser, and a controller for controlling the flow of beverage from the dispenser. Some beverage dispensers may have a display panel, such as a touchscreen, via which a user may select the type or flavour of beverage to be dispensed.

In some beverage dispensers, the flow of beverage from the dispenser is manually controlled by the user, for example by pressing a button to start and stop the flow of beverage. Manually controlled dispensers allow users to use a receptacle of their choice, of any suitable size or shape, but rely on the user to stop the flow of beverage before the receptacle overflows. Receptable overflow is wasteful and environmentally unfriendly. Manually controlling the flow of beverage into the receptable is also time consuming, with the user having to repeatedly press the flow button to fill the receptable without it overflowing, which is of particular relevance in quick serve restaurants (QSRs).

Some beverage dispensers are automatic or semi-automatic and dispense a predetermined volume of beverage. For example, a beverage dispenser may be adapted for use with receptacles having a predetermined volume. Thus, for example, the user may select a "small", "medium" or "large" receptacle, and then select the corresponding volume of beverage to be dispensed. The beverage dispenser may have a pressure sensor in the receptacle support, which weighs the receptacle placed on the support, associates the weight of the receptacle with a known volume ("small", "medium" or "large"), and either automatically dispenses the corresponding volume of beverage without the user needing to make this selection, or prevents a volume of beverage being dispensed which exceeds the volume of the receptacle.

Beverage dispensers for use with receptacles having a known, predetermined volume have the advantage of the prevention of overflow, and may be suitable for use in a public setting, such as a bar or restaurant, where receptacles of a known predetermined volume can be provided. However, in a private setting such as a home or office, receptacles of a known, predetermined volume are typically not provided, and users often have a preferred receptacle which they like to use, i.e. a favourite cup or glass. Attempts have been thus made in the art to provide automatic or semi-automatic beverage dispensers which may be used with receptacles of different shapes and sizes.

Thus, for example, US patent numbers 4944335 and 5036892 describe beverage dispensers in which an ultrasonic sensor is located above a receptacle behind a dispense nozzle, and is used to detect the presence of a receptacle, the rim height of the receptacle, and the fill level of beverage in the receptacle. When the receiver detects that the fill level has reached a predetermined maximum relative to the rim height, then the dispenser stops dispensing the beverage. The beverage dispenser thus attempts to detect the fill level in the receptacle in real time through constant monitoring as the receptacle fills with beverage.

More recently, smart technologies have been incorporated into beverage dispensers. Thus, for example, US patent numbers 7617850 and 7845375 describe beverage dispensing systems in which a receptacle comprises an RFID tag which can store information regarding the receptable, including its volume, for dispensing an appropriate amount of beverage to prevent overflow. The RFID tag may also store information regarding the type of material from which the receptacle is made, which can for example prevent the beverage dispensing system from dispensing a hot beverage if the receptable is not suitable for holding a hot beverage. The RFID tag can also store information regarding the use history of the receptacle, including the different beverages and amounts which have been purchased/dispensed using that receptacle.

US 2014/03119168 describes a beverage dispenser which comprises a sensor system which employs digital imaging technology to determine, for example, the dimensions, volume and positioning of a receptacle on a receptacle support.

US 5491333 discloses a dispensing method and apparatus for detecting the presence of a container and determining the relative size of the detected container, and automatically dispensing a product into the detected container while monitoring the fill level of the product in the container. Dispensing is automatically discontinued when the fill level nears the top of the container.

US 2008/264092 discloses a sensing system for a refrigerator dispensing system for sensing the presence, positioning, height and shape of a container placed in a dispensing well. When the presence of the container is sensed in the dispensing well and the container is properly positioned relative to a dispensing nozzle of the well, a dispensing operation can be performed.

US 5573041 discloses a method and apparatus for detecting the position of an object, such as a container, within a multidimensional target space above which is a dispensing spigot to dispense water, ice, or other beverage. The system has a transceiver emitting pulses of ultrasonic waves, a portion of which are reflected by the object in the target space and detected by the transceiver, and a processing circuit for determining the relative strength of the reflected signals and the time it takes an ultrasonic wave to be emitted, reflected, and received by a transceiver. The received signal is checked to determine if the amplitude of the reflected ultrasonic wave is consistent with an object occupying the target space.

KR 2018 0055511 A discloses a water purifier having a first sensor for determining a width of a container and a second sensor for determining a height of the container. The capacity of the container is calculated by using the container dimensions. A control unit calculates the amount of water to be dispensed and actuates a dispense action. The dispenser has a user input means comprising a touch screen. The sensors can be ultrasonic sensors.

The present invention seeks to provide an improved dispenser for dispensing a material into a receptacle, preferably a beverage, and a method of dispensing a material from a dispenser into a receptacle.

Thus, according to the present invention in a first aspect there is provided a dispenser for dispensing a material into a receptacle, the dispenser comprising
a dispenser outlet for dispensing material into a receptacle;
a support for receiving a receptacle;
at least one lateral sensor positioned to laterally sense a receptacle received on the support;
an upper sensor positioned to sense a receptacle received on the support from above; and
a controller operatively connected to the lateral and upper sensors and configured to sense the presence of a receptacle received on the support, calculate the volume of a receptacle and/or the volume of material within a receptacle from data received from the lateral and upper sensors, and control the volume of material dispensed from the dispenser outlet into the receptacle based upon the calculated volume of the receptacle and/or the volume of material within the receptacle;
wherein the dispenser comprises user input means through which a user can make selections regarding the material to be dispensed, and is configured to be able to add an additive to a receptable pre-filled with material, wherein the amount of additive to be dispensed is calculated in accordance with the user selection and the calculated volume of material within the receptable; and
wherein the lateral and upper sensors comprise ultrasonic sensors.

It is to be noted that whilst the dispenser of the present invention is preferably for use in dispensing liquids, in particular beverages, it is not limited in this connection, and may be used for dispensing solids, such as powders.

Advantageously, the dispenser of the present invention can firstly sense the presence of a receptacle received by the support. If no receptacle is sensed, then the controller may be configured to prevent any material being dispensed by the dispenser. The dispenser of the present invention can also calculate the volume of a receptacle placed on the support by the sensors measuring external dimensions of the receptacle. The controller can then control the amount of material dispensed from the dispenser outlet based upon this volume calculation, for example to a desired maximum fill level. The dispenser of the present invention thus has an environmental advantage in that it can reduce waste, by reducing or eliminating overflow of material from the receptable. The dispenser of the present invention has the further advantage of time-saving, which is of particular relevance in quick serve restaurants (QSRs), since a user can fill a receptacle with a single action, e.g. a button press.

In addition, the upper sensor can detect whether or not the receptacle already contains any material, for example water or ice. This has the advantage that not only can the controller control the amount of material dispensed from the dispenser outlet based upon the calculated volume of the receptacle and volume of material already in the receptacle, but can also be used to provide bespoke beverages for a particular user, for example through the user pre-programming the controller with their preferences through a user input (e.g. touchscreen).

Thus, for example, the dispenser can be used to add an additive, such as a flavour concentrate, to a receptable pre-filled with material, for example water, by a user. By calculating the volume of material already in the receptacle, the dispenser can dispense a particular amount of additive to the receptacle according to the particular requirements of the user. For example, in the case of a beverage, the controller can control the dispenser to dispense an additive, such as a flavour concentrate, in an amount calculated according the calculated volume of water in the receptacle, for example to provide a particular dilution factor, according to the pre-programmed preference of that user. In this way, the dispenser can provide a "perfect" beverage for that user, without the user needing to measure out a precise volume of water into the receptacle.

The dispenser of the present invention comprises a dispenser outlet for dispensing material into a receptacle, and a support for receiving a receptacle. The dispenser outlet is preferably positioned above the support so that material being dispensed is dispensed directly into the receptacle. The dispenser outlet is in communication with a source of material to be dispensed, for example hot and cold beverages, carbonated and non-carbonated beverages, alcoholic and non-alcoholic beverages, flavour concentrates, syrups, and so forth. The support is preferably positioned directly beneath the dispenser outlet, and may have positioning means for enabling a receptacle to be correctly positioned on the support, such as a centrally positioned stepped or conical well for receiving a receptable, for ensuring that the receptacle is centrally positioned beneath the dispenser outlet and/or relative to the lateral and upper sensors.

The dispenser of the present invention further comprises at least one ultrasonic lateral sensor positioned laterally of the support for laterally sensing a receptacle received on the support. The lateral sensor senses the receptacle by transmitting and receiving a signal laterally across the space above the support. The sensor may thus measure the time taken for the signal to be reflected, or another signal property such as intensity of the reflected signal, which can be converted to distance. Additionally, the lateral sensor may employ optical recognition means, such as digital imaging technology, to capture an image of the receptacle. Optical recognition means may include a camera and/or 3D imaging technology. In this way, the presence of a receptacle received on the support can be detected, the external dimensions of the receptacle can be calculated, and hence also the volume of the receptacle. The dispenser may comprise one or more lateral sensors, for example two, three, four, five, six or more lateral sensors. If a single lateral sensor is used then the support means preferably comprises positioning means to ensure that the positioning of a receptacle received on the support is accurately known. However, preferably a plurality of lateral sensors is used, with the sensors preferably positioned around the support to, for example, reflect signals or capture images from different parts of the surface of a receptacle. Thus, the lateral sensors may be spaced apart in different positions along the X, Y and/or Z Cartesian axes relative to the support (i.e. different positions side-to-side, front-to-back, and/or at different heights from the support). Preferably, the dispenser comprises lateral sensors on opposite sides of the support, which allows compensation to be made for a receptacle which is not centred on the support, i.e. an average of the calculated distances to the receptacle from opposite sides of the receptacle can be used to calculate the external dimensions of the receptacle. In addition, if the distance measurements from opposite sides of the support differ to a large extent, for example greater than a predetermined threshold difference, then the controller may be configured to prevent any material being dispensed by the dispenser, since the large difference in distance measurements may indicate that the receptable is positioned too far off-centre to properly receive the material from the dispenser outlet. Likewise, off-setting the lateral sensors front-to-back can provide for greater accuracy of measurement, in particular if a receptacle is not placed centrally on the support. The dispenser may thus comprise a first lower lateral sensor, a second lateral sensor on an opposite side of the dispenser to and above the first lateral sensor, and a third lateral sensor above the second lateral sensor and on same side of the dispenser as the first lateral sensor.

The dispenser of the present invention further comprises an upper ultrasonic sensor positioned above the support to sense a receptacle received on the support from above. The dispenser may comprise one upper sensor or a plurality of upper sensors (for example two, three, four or more sensors). For example, the dispenser may comprise a first upper sensor positioned for detecting the rim height of a receptacle, and a second upper sensor positioned for detecting the fill level of material within the receptacle. Alternatively, a single upper sensor may be used which is configured to detect two signal reflections instead of one, and thus detect the two closest objects to the sensor (which will typically be the receptacle rim and the fill level of material within the receptacle). The sensor may for example measure the time taken for a signal to be reflected, or another signal property, such as the intensity of the reflected signal, which can be converted to distance. In this way the height of the receptacle and/or fill level of material within the receptacle can be measured. The upper sensor may additionally employ optical recognition means, such as digital imaging technology, to capture an image of the receptacle, through which the height, fill level and/or other dimensions or properties of the receptacle can be calculated. Optical recognition means may include a camera and/or 3D imaging technology. The optical recognition means may be used together with a light source to illuminate a receptacle positioned on the support. Optical recognition means may be used to capture images of a receptacle before and/or after being filled with material. For example, if the dispenser is used in a commercial setting such as a restaurant (for example a QSR)or a workplace, and customers/users of the dispenser bring their own preferred receptacles for use with the dispenser, then capturing images of the receptacle before and/or after being filled with material may be useful for quality control/management purposes. Thus, for example, if a customer/user were to raise an issue regarding the quality of a beverage dispensed by the dispenser, an image of the receptacle contents before and after the beverage was dispensed may be of assistance in helping to resolve the issue. The upper sensor may comprise a light source configured to emit ultra-violet (UV) light, for example a UVC light source. The UV light source may be used to sterilise a receptacle received on the support and/or parts of the dispenser (for example, the support and/or dispenser outlet).

The lateral and upper sensors comprise ultrasonic sensors. Other sensors may additionally be used, including infrared (IR) sensors, laser (e.g. LiDAR) sensors, time-of-flight sensors, and optical recognition means such as cameras and/or 3D imaging technology. Different sensors have different specifications, including range (cm), accuracy (+cm), sensing envelope (+ degrees), dimensions (size), and so forth, and the particular sensors to be used will depend upon the particular dispenser in question. For example, a sensor tuned for relatively longer ranges may be more appropriate in a relatively large dispenser for use in, say, a commercial setting such as a restaurant, compared to a relatively small dispenser for use in the home or office, in which a sensor tuned for a relatively shorter range may be appropriate. The one or more lateral sensors and upper sensor(s) comprise ultrasonic sensors which may be configured to detect the first echo (i.e. the first object encountered), the first and second echoes (i.e. the first and second objects encountered), and so forth, according to requirements. The lateral and/or upper sensors may further comprise optical recognition means to capture an image of the receptacle.

In the dispenser of the present invention, the dispenser outlet is positioned above the support so that material being dispensed is preferably dispensed directly into the receptacle. According to the design of the dispenser, it may thus be preferable for the upper sensor to be positioned away from the dispenser outlet, for example to allow for a signal transmitted by the upper sensor to be reflected towards a receptable received on the support, for example by an appropriately positioned reflector.

For example, a reflector may be positioned adjacent or around the dispenser outlet for reflecting a signal from the upper sensor downwardly towards a receptable received on the support. Thus, a reflector angled at 45 degrees will reflect a signal orthogonally, meaning that the upper sensor may be positioned to transmit a signal laterally (e.g. substantially horizontally), which is then reflected orthogonally by the reflector, downwardly towards a receptacle received by the support (and vice versa for the reflected signal). The reflector may comprise a plate, which may conveniently have a centrally positioned gap, through which the dispenser outlet may extend. The reflector is preferably planar, and may have dimensions so as to focus a signal in a particular direction or area.

It may be desirable to direct or focus a sensor signal in a particular direction, and for this purpose a signal guide, such as a shroud for ultrasonic sound waves, may be used. For example, it may be desirable that the upper sensor is used only to detect the volume of material in a receptable, rather than the height of the receptacle, in which case it is preferable to direct a signal from the upper sensor into the receptacle without detecting the rim of the receptacle walls (which is likely to be the closest surface detected by the upper sensor).

The dispenser of the present invention further comprises a controller operatively connected to the lateral and upper sensors and configured to sense the presence of a receptacle, calculate the volume of the receptacle and/or the volume of material within the receptacle from data received from the lateral and upper sensors, and control the volume of material dispensed from the dispenser outlet into the receptacle based upon the calculated volume of the receptacle and/or the volume of material within the receptacle. The controller may control the amount of material being dispensed from the dispenser as a time based flow rate calculation or a volumetric flow rate calculation. Thus, the dispenser may be configured to dispense material at a fixed flow rate, and/or may comprise a flow rate monitor which monitors the flow rate of material being dispensed, with the controller configured to make appropriate adjustments to the flow rate based upon the flow rate measurements. The controller may also be configured to control or adjust the properties of the material being dispensed, such as temperature, pressure, viscosity, concentration, and so forth.

The controller preferably comprises a computer having a programmable memory, which is capable of receiving instructions from a user. Thus, the dispenser comprises a user input means, for example a touchscreen, through which a user can make various selections regarding the material they wish to be dispensed. For example, in the case of a beverage, the user may be able to select the type of beverage, the fill level, the flavour, and so forth. The controller is configured to process the user instructions to control the type and amount of material to be dispensed from the dispenser, according to the user selection(s), and available volume of the receptacle, as calculated from the data received from the lateral and upper sensors. For example, if the user selects a particular beverage to be dispensed and places an empty receptacle on the support, then the controller can control the dispenser to dispense an appropriate volume of that beverage up to a fill maximum. Alternatively, if the user wants a flavoured water beverage, then the user can fill a receptacle with a desired volume of water, place the receptacle on the support, and select the particular additive to be added through user input means. The volume of water in the receptacle is calculated according to the data received from the lateral and upper sensors, and the controller instructs the dispenser to dispense an appropriate amount of the requested additive. In embodiments, the user may have pre-programmed the dispenser according to their own particular preferences for a given additive, such that the controller can instruct the dispenser to dispense the correct amount of additive, based upon the calculated volume of water in the receptacle, so as to provide a "perfect" beverage for that user, without the user needing to measure out a precise volume of water into the receptacle. The controller may be configured to store multiple user profiles in a programmable memory. Thus, in a domestic setting, each member of the household may have their own user profile stored in the memory of the controller, which contains their own preferences for different beverages, for example, flavour/additive combinations, concentrations, and so forth.

The user input means may comprise a display, such as a touchscreen display, which can be used not only to enable the user to input selections, but also for displaying information to the user, such as nutritional information regarding particular beverages, the history of use of the dispenser by that particular user, and/or when the dispenser needs refilling with a particular material.

The dispenser may be configured for wireless communication, for example Bluetooth^{®}, Wi-Fi^{®}, 4G^{®} or 5G^{®}, etc. The dispenser may thus be able to communicate with mobile devices, such as smartphones, through which a user may be able to input selections, for example through an appropriate app.

The controller may be configured to receive, store and process other information. For example, the controller may be configured to use smart technologies, for example to receive information from a receptacle which incorporates communication means, such as an RFID tag. The communication means may incorporate information, for example via an identification code, regarding the receptacle and/or the user, such as user preferences for beverages, so that, for example, the controller can instruct the dispenser to dispense a particular additive or beverage to the receptacle without the need for any further input by the user. Additionally or alternatively, the receptacle may comprise an optical identifier, for example a barcode or QR code, and the dispenser may comprise an optical identifier reader, the optical identifier providing information regarding the receptacle and/or user. The dispenser of the present invention may for example further comprise a pressure sensor in the support, to provide data regarding the weight of the receptacle, and as discussed above may comprise optical recognition means, such as digital imaging technology to provide data regarding the dimensions, volume and/or positioning of a receptacle on the support.

The controller used in the dispenser of the present invention may be configured to use artificial intelligence (AI), and in particular machine learning to improve the accuracy of volume calculations. The controller may thus have a programmable memory which is able to store and compare data regarding the volume of different types of receptacles, and use this comparison to provide more accurate volume calculations through the use of volume estimation algorithms. For example, the controller may be configured to compare data regarding the volume of a newly measured receptacle for similarities with data for receptacles stored in its memory. The comparison may be through known techniques such as analysing degrees of similarity and cluster analysis. The controller memory may be pre-stored with volume data for different receptacles which have been measured from a prior learning phase, which is updated and refined as new receptacles are measured. The dispenser of the present invention may be connectable to the internet, to enable the programmable memory to be updated with additional receptacle volume data, either from time to time at periodic intervals, or continuously in real time from other dispensers, i.e. the dispensers update each other. Machine learning can assist with the accuracy of volume calculations by taking into account factors which affect the volume of material which a receptacle can hold, such as wall and base thicknesses, the material from which a receptacle is made, geometry (e.g. simple versus more complicated shapes), and so forth, in particular when combined with other information, such as receptable weight (as measured for example by a pressure sensor), and shape (as measured for example by image capture). For example, during a learning phase the actual volume of a large number of different receptacles can be directly measured by filling each receptacle with material (e.g. water), and the volumes as calculated from the sensor data can be compared with the actual volume data, and adjustments made to take into account factors which affect volume, such as those listed above.

According to the present invention in a second aspect there is also provided a method of dispensing a material from a dispenser into a receptacle, the method comprising the steps of:
receiving the receptacle on a support;
sensing the receptacle laterally using at least one lateral sensor positioned laterally of the support;
sensing the receptacle from above using an upper sensor positioned above the support;
sensing the presence of the receptacle, and calculating the volume of the receptacle and/or the volume of material within the receptacle from data received from the lateral and upper sensors;
receiving instructions from a user through a user input means regarding the material to be dispensed, wherein the material to be dispensed may comprise an additive to be added to a receptacle pre-filled with material, wherein the amount of additive to be dispensed is calculated in accordance with the user selection and the calculated volume of material within the receptacle;
   and
dispensing material into the receptacle based upon the calculated volume of the receptacle and/or the volume of material within the receptacle;
wherein the lateral and/or upper sensors sense the receptacle on the support by transmitting and receiving ultrasonic sound waves.

The method of the second aspect of the present invention may be carried out using the dispenser of the first aspect of the invention. Thus, the method of the second aspect of the invention may incorporate any or all of the features and embodiments of the first aspect of the invention, and vice versa.

Thus, in the method of the present invention, a controller operatively connected to the lateral and upper sensors may be configured to detect the presence of a receptable on the support, calculate the volume of the receptacle and/or the volume of material within the receptacle from data received from the lateral and upper ultrasonic sensors, and control the volume of material dispensed from the dispenser outlet into the receptacle based upon the calculated volume of the receptacle and/or the volume of material within the receptacle. The controller may be configured to prevent the dispenser from dispensing material if no receptacle is sensed on the support. The controller may control the amount of material being dispensed from the dispenser as a time based flow rate calculation or a volumetric flow rate calculation. Thus, the material may be dispensed from the dispenser at a fixed flow rate, and/or the flow rate may be monitored by a flow rate monitor, with the controller making appropriate adjustments to the flow rate based upon the flow rate measurements. Other properties of the material being dispensed may also be controlled by the controller, such as temperature, pressure, viscosity, concentration, and so forth.

In the method of the present invention, the lateral and upper sensors sense the receptacle on the support by transmitting signals towards the receptacle and receiving the reflected signals. Signals transmitted and received by the sensors are ultrasonic sound waves, i.e. the one or more lateral and upper sensors comprise ultrasonic sensors. However, as discussed above in connection with the dispenser of the present invention, the lateral and upper sensors may further comprise other types of sensors, such as infrared (IR) sensors, laser (e.g. LiDAR) sensors, time-of-flight sensors, and optical recognition means such as cameras and/or 3D imaging technology.

In embodiments of the method of the present invention, the volume of the receptable may be measured by the user sliding the receptacle into position on the support, or may be measured through the use of a plurality of upper sensors. In the former embodiments, a narrower signal beam from the upper sensor may be used, for example through the use of a wave guide, and the user slides the receptacle through the beam when placing the receptable in position on the support. In this way, the upper sensor detects an initial echo as the receptacle rim passes through the signal beam, and a second echo from the surface of any material in the receptacle (or the inside base of the receptacle if empty). In the latter embodiments, the rim of the receptacle is detected by a first upper sensor, and the surface of any material in the receptacle (or the inside base of the receptacle if empty) is detected by a second upper sensor.

The method of the present invention comprises the step of a user inputting instructions to the dispenser through user input means, for example a touchscreen. Thus, the user may make various selections regarding the material they wish to be dispensed. For example, in the case of a beverage, the user may select the type of beverage, the fill level, the flavour, and so forth. The user instructions are preferably processed by a controller to control the type and amount of material to be dispensed from the dispenser, according to the user selection(s), and available volume of the receptacle, as calculated from the data received from the lateral and upper sensors. For example, if the user selects a particular beverage to be dispensed and places an empty receptacle on the support, then a controller preferably controls the dispenser to dispense an appropriate volume of that beverage up to a fill maximum. Alternatively, if the user wants a flavoured water beverage, then the user fills a receptacle with a desired volume of water, places the receptacle on the support, and selects the particular additive to be added through the user input means. The volume of water in the receptacle is calculated according to the data received from the lateral and upper sensors, and a controller instructs the dispenser to dispense an appropriate amount of the requested additive. In embodiments, the user may have pre-programmed the dispenser according to their own particular preferences for a given additive, such that the controller instructs the dispenser to dispense the correct amount of additive, based upon the calculated volume of water in the receptacle, so as to provide a "perfect" beverage for that user, without the user needing to measure out a precise volume of water into the receptacle. Multiple user profiles may be stored in a programmable memory. Thus, in a domestic setting, each member of the household may have their own user profile stored, which includes their own preferences for different beverages, for example, flavour/additive combinations, concentrations, and so forth.

In the method of the present invention, information may be transmitted and received by a user wirelessly, for example by Bluetooth^{®}, Wi-Fi^{®}, 4G^{®} or 5G^{®}, etc. The user may communicate with the dispenser via a mobile device, such as a smartphone, via an appropriate app.

The method of the present invention may further comprise a controller receiving, storing and processing other information. For example, the controller may use smart technologies, for example receiving information from a receptacle which incorporates communication means, such as an RFID tag. The communication means may incorporate information, for example via an identification code, regarding the receptacle and/or the user, such as user preferences for beverages, so that, for example, the controller can instruct the dispenser to dispense a particular additive or beverage to the receptacle without the need for any further input by the user. Additionally or alternatively, the method may comprise reading an optical identifier, for example a barcode or QR^{®} code, on the receptacle by an optical identifier reader, the optical identifier providing information regarding the receptacle and/or user. The method may comprise weighing the receptacle, for example through a pressure sensor in the support, to provide data regarding the weight of the receptacle, or may further comprise optically recognising the receptacle using optical recognition means, such as digital imaging technology to provide further data regarding the dimensions, volume and/or positioning of a receptacle on the support, to be used in conjunction with the data from the sensors.

The method of the present invention may use artificial intelligence (AI), and in particular machine learning to improve the accuracy of volume calculations. The method may thus comprise the use of a controller having a programmable memory to store and compare data regarding the volume of different types of receptacles, and use this comparison to provide more accurate volume calculations through the use of volume estimation algorithms. For example, the method may comprise the controller comparing data regarding the volume of a newly measured receptacle for similarities with data for receptacles stored in its memory. The comparison may be through known techniques such as analysing degrees of similarity and cluster analysis. The method may comprise a prior learning phase in which volume data for different receptacles are measured and stored in the controller memory. The data may be updated and refined as new receptacles are measured, including data from other dispensers via the internet, either from time to time at periodic intervals, or continuously in real time.

Machine learning can assist with the accuracy of volume calculations by taking into account factors which affect the volume of material which a receptacle can hold, such as wall and base thicknesses, the material from which a receptacle is made, geometry (e.g. simple versus more complicated shapes), and so forth, in particular when combined with other information, such as receptable weight (as measured for example by a pressure sensor), and shape (as measured for example by image capture). For example, during a learning phase the actual volume of a large number of different receptacles can be directly measured by filling each receptacle with material (e.g. water), and the volumes as calculated from the sensor data can be compared with the actual volume data, and adjustments made to take into account factors which affect volume, such as those listed above.

For example, the method of the present invention may involve the step of continuously monitoring the fill level of a receptacle as it fills with material. If the geometry of a receptacle is known or can accurately be estimated by comparison with data for known receptacles stored in a controller memory, then dispensing a known volume of material into the receptacle should result in a predictable change in the radius and/or height of the upper surface of material in the receptacle. The radius and/or height data, continuously measured as the receptacle fills, can be compared with predicted data calculated from measurements from known receptacles, and any deviations from the predicted data can be used through machine learning to update the data contained in the controller memory to provide more accurate volume data in the future.

The dispenser and method of the present invention work most accurately with receptacles which are rotationally symmetrical, for example having a circular cross-section. For the use of a receptacle having a different shape, for example having a square cross-section, or more complex shape, for example due to a handle, the controller may for example be configured to either prevent the dispenser from dispensing material into the receptacle in the event that it does not recognise the receptacle geometry, and/or request that the user identifies the receptacle, for example through user input means. The use of artificial intelligence, such as machine learning as described above, allows a controller having a programmable memory to compare newly measured receptacle geometries with known geometries stored in the memory, to recognise and provide more accurate volume measurements for a wider variety of receptacle geometries.

### [PARAGRAPHS DELETED HERE]

Embodiments of the present invention will now be described in detail with reference to the accompanying drawings, in which:
Figure 1 shows a front view of an embodiment of a dispenser according to the first aspect of the present invention;
Figures 2a and 2b show a side view and view from below respectively of an upper ultrasonic sensor, reflector and dispenser outlet for use in an embodiment of a dispenser according to the first aspect of the present invention;
Figure 3 shows the measured dimensions of glasses of different shapes containing 200ml of water using a dispenser as illustrated in Figure 1; and
Figure 4 is a plot of "slide-in" data from an upper ultrasonic sensor for use in a dispenser as illustrated in Figure 1, detecting the edge and base of a glass slid into position.

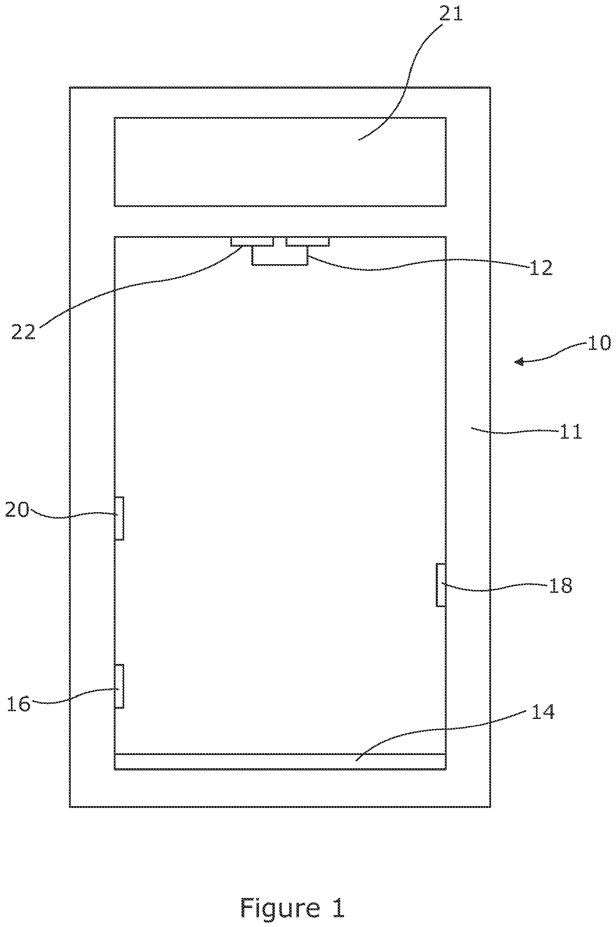

An embodiment of a dispenser 10 of the first aspect of the present invention is shown in Figure 1. The dispenser 10 comprises a housing 11 which is open at the front, and into which a receptable (not shown in Figure 1) may be placed, to be received on a support 14. A dispenser outlet 12 for dispensing material into a receptacle is positioned directly above the support 14, for dispensing a material, such as a beverage, into the receptacle. The dispenser outlet 12 is in communication with a source of material (not shown in Figure 1) to be dispensed, for example hot and cold beverages, carbonated and non-carbonated beverages, alcoholic and non-alcoholic beverages, flavour concentrates, syrups, and so forth. The support 14 may have positioning means (not shown) for enabling a receptacle to be correctly positioned on the support 14. The dispenser 10 also comprises a user input means in the form of touchscreen 21, through which a user can make various selections regarding the material they wish to be dispensed.

The dispenser 10 further comprises first 16, second 18, and third 20 lateral ultrasonic sensors for transmitting ultrasonic sound waves laterally against the side walls of a receptacle received on the support 14 and receiving the reflected waves, an upper ultrasonic sensor 22 positioned above the support 14 for transmitting ultrasonic sound waves downwardly towards a receptacle and receiving the reflected waves, and a controller (not shown in Figure 1) operatively connected to the lateral 16, 18, 20 and upper 22 ultrasonic sensors and configured to sense the presence of a receptacle on the support, calculate the volume of a receptacle and/or the volume of material within a receptacle from data received from the lateral 16, 18, 20 and upper 22 ultrasonic sensors, and control the volume of material dispensed from the dispenser outlet 12 into a receptacle based upon the calculated volume of the receptacle and/or the volume of material within the receptacle.

The lateral ultrasonic sensors 16, 18 and 20 are located in the side walls of the housing 11, with the first 16 and third 20 ultrasonic sensors located on the same side of the housing 11, and the second ultrasonic sensor 18 positioned at a height from the support 14 between the first 16 and third 20 ultrasonic sensors, and located on the opposite side of the housing 11. Whilst this embodiment of the dispenser of the invention comprises three lateral ultrasonic sensors, more or fewer lateral sensors may be used. If only a single lateral sensor is used, then the support preferably comprises positioning means for positioning a receptacle on the support 14 with known accuracy. In the illustrated embodiment, the lateral ultrasonic sensors 16, 18 and 20 are positioned at heights from the support 14 according to the requirements of the dispenser 10 and its intended use. Thus, for example, in for use in the home, typical receptacles which might be used with the dispenser 10 are a mug/tumbler, a highball type glass, either straight-sided or curved, and a wine glass. These different glasses may have a radius of from, for example, 5 to 8cm, and a height of from, for example, 6 to 20cm, depending upon the receptacle. The lateral ultrasonic sensors 16, 18, 20 will thus be positioned at appropriate heights from the support 14 to measure the radii of the different receptacles. For example, the first lateral ultrasonic sensor 16 may be positioned, for example, at a height of from 2 to 5cm above the sensor, the second lateral ultrasonic sensor 18 may be positioned, for example, at a height of from 6 to 8cm above the support 14, and the third ultrasonic sensor 20 may be positioned, for example, at a height of from 9 to 12cm above the support 14. The lateral ultrasonic sensors are also preferably offset front-to-back (although this cannot be seen in the front view of Figure 1). The upper ultrasonic sensor 22 is positioned above a receptacle positioned on the support 14, for example at a height of 20-25cm above the support 14 to accommodate the different types of receptacles to be used with the dispenser 10, and the housing 11 is thus sized accordingly.

Any suitable ultrasonic sensor may be used as the lateral ultrasonic sensors 16, 18, 20 and upper ultrasonic sensor 22 in the dispenser 10, according to the requirements of the dispenser. Different ultrasonic sensors have different specifications, including range (cm), accuracy (+cm), sensing envelope (+ degrees), and dimensions (size), and the particular sensor to be used will depend upon the particular dispenser in question. For example, a suitable ultrasonic sensor may have a range of from 2-3000cm, an accuracy of + 0.3cm), a sensing envelope of + 15°, and dimensions of approximately 15-25 x 40-50mm (width x height).

The dispenser 10 may comprise one upper ultrasonic sensor 22 or a plurality of upper ultrasonic sensors 22 (for example two, three, four or more sensors). The embodiment illustrated in Figure 1 has a single upper ultrasonic sensor 22. For example, the dispenser 10 may comprise a first upper ultrasonic sensor positioned for detecting the rim height of a receptacle, and a second upper ultrasonic sensor positioned for detecting the fill level of material within the receptacle. Alternatively, a single upper ultrasonic sensor may be used which is configured to detect two echoes instead of one, and thus detect the two closest objects to the sensor (which will typically be the receptacle rim and the fill level of material within the receptacle).

In the dispenser 10 of the present invention, the dispenser outlet 12 is positioned above the support 14 so that material being dispensed is dispensed directly into the receptacle. In the embodiment illustrated in Figure 1, the dispenser outlet 12 and upper ultrasonic sensor 22 are adjacent, directly above the support 14. Alternatively, the upper ultrasonic sensor 22 may be positioned away from the dispenser outlet 12 and for the ultrasonic sound waves transmitted by the upper ultrasonic sensor 22 to be reflected towards a receptable received on the support.

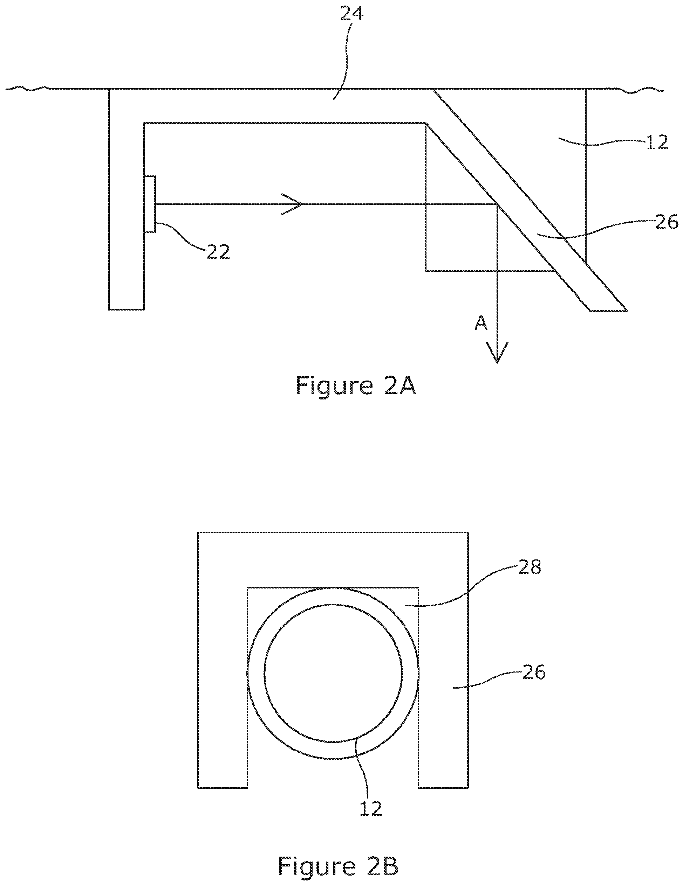

For example, with reference to Figures 2a and 2b, a reflector assembly 24 may be positioned adjacent the dispenser outlet 12 for reflecting ultrasonic sound waves from the upper ultrasonic sensor 22 downwardly towards a receptable received on the support 14. The reflector assembly 24 comprises a reflector 26 angled at 45 degrees to reflect ultrasonic waves orthogonally, meaning that the upper ultrasonic sensor 22 is positioned to transmit ultrasonic sound waves laterally (e.g. substantially horizontally), which are then reflected orthogonally by the reflector 26, downwardly towards a receptacle received by the support 14, as indicated in Figure 2a by arrow A (and vice versa for the echoes). As shown in Figure 2b, the reflector plate 26 has a centrally positioned gap 28 through which the dispenser outlet 12 extends.

The dispenser 10 further comprises a controller (not shown in the Figures) operatively connected to the lateral 16, 18, 20 and upper 22 ultrasonic sensors and configured to calculate the volume of the receptacle and/or the volume of material within the receptacle from data received from the lateral 16, 18, 20 and upper 22 ultrasonic sensors, and control the volume of material dispensed from the dispenser outlet 12 into the receptacle based upon the calculated volume of the receptacle and/or the volume of material within the receptacle. The controller may control the amount of material being dispensed from the dispenser as a time based flow rate calculation or a volumetric flow rate calculation. Thus, the dispenser 10 may be configured to dispense material at a fixed flow rate, and/or may comprise a flow rate monitor (not shown in the Figures) which monitors the flow rate of material being dispensed, with the controller configured to make appropriate adjustments to the flow rate based upon the flow rate measurements. The controller may also be configured to control or adjust the properties of the material being dispensed, such as temperature, pressure, viscosity, concentration, and so forth.

The controller preferably comprises a computer having a programmable memory, which is capable of receiving instructions from a user, through touchscreen 21. For example, in the case of a beverage, the user may be able to select the type of beverage, the fill level, the flavour, and so forth. The controller is preferably configured to process the user instructions to control the type and amount of material to be dispensed from the dispenser 10, according to the user selection(s), and available volume of the receptacle, as calculated from the data received from the lateral 16, 18, 20 and upper 22 ultrasonic sensors. For example, if the user selects a particular beverage to be dispensed and places an empty receptacle on the support 14, then the controller can control the dispenser 10 to dispense an appropriate volume of that beverage up to a fill maximum. Alternatively, if the user wants a flavoured water beverage, then the user can fill a receptacle with a desired volume of water, place the receptacle on the support 14, and select the particular additive to be added through the touchscreen 21. The volume of water in the receptacle is calculated according to the data received from the lateral 16, 18, 20 and upper 22 ultrasonic sensors, and the controller instructs the dispenser 10 to dispense an appropriate amount of the requested additive. In embodiments, the user may have pre-programmed the dispenser 10 according to their own particular preferences for a given additive, such that the controller can instruct the dispenser 10 to dispense the correct amount of additive, based upon the calculated volume of water in the receptacle, so as to provide a "perfect" beverage for that user, without the user needing to measure out a precise volume of water into the receptacle. The controller may be configured to store multiple user profiles in a programmable memory. Thus, in a domestic setting, each member of the household may have their own user profile stored in the memory of the controller, which contains their own preferences for different beverages, for example, flavour/additive combinations, concentrations, and so forth.

The touchscreen display 21, can be used not only to enable the user to input selections, but also for displaying information to the user, such as nutritional information regarding particular beverages, the history of use of the dispenser by that particular user, and/or when the dispenser needs refilling with a particular material.

As discussed above, the dispenser 10 is preferably configured for wireless communication, for example Bluetooth^{®}, Wi-Fi^{®}, 4G^{®} or 5G^{®}, and so forth, to enable the dispenser 10 to communicate with mobile devices, such as smartphones, through which a user may be able to input selections, for example through an appropriate app. In addition, the controller is preferably configured to use smart technologies, for example to receive information from a receptacle which incorporates communication means, such as an RFID tag, which incorporates information, for example via an identification code, regarding the receptacle and/or the user, such as user preferences for beverages. The receptacle may comprise an optical identifier, for example a barcode or QR^{®} code, and the dispenser 10 may comprise an optical identifier reader (not shown in the Figures), the optical identifier providing information regarding the receptacle and/or user. The dispenser 10 may comprise a pressure sensor (not shown in the Figures) in the support 14, to provide data regarding the weight of the receptacle.

The controller used in the dispenser 10 of the present invention is preferably configured to use artificial intelligence (AI), and in particular machine learning to improve the accuracy of volume calculations. The controller preferably has a programmable memory which is able to store and compare data regarding the volume of different types of receptacles, and use this comparison to provide more accurate volume calculations through the use of volume estimation algorithms. The controller may be configured to compare data regarding the volume of a newly measured receptacle for similarities with data for receptacles stored in its memory. The controller memory may be pre-stored with volume data for different receptacles which has been measured from a prior learning phase, which is updated and refined as new receptacles are measured. The dispenser 10 is preferably connectable to the internet, to enable the programmable memory to be updated with additional receptacle volume data, either from time to time at periodic intervals, or continuously in real time from other dispensers, i.e. the dispensers update each other. Machine learning can assist with the accuracy of volume calculations by taking into account factors which affect the volume of material which a receptacle can hold, such as wall and base thicknesses, the material from which a receptacle is made, geometry (e.g. simple versus more complicated shapes), and so forth, in particular when combined with other information, such as receptable weight (as measured for example by a pressure sensor), and shape (as measured for example by image capture). For example, during a learning phase the actual volume of a large number of different receptacles can be directly measured by filling each receptacle with material (e.g. water), and the volumes as calculated from the ultrasonic sensor data can be compared with the actual volume data, and adjustments made to take into account factors which affect volume, such as those listed above.

Whilst this preferred embodiment comprises ultrasonic lateral and upper sensors, as discussed above different types of sensors may additionally be used in the dispenser and method of the present invention, such as infrared (IR) sensors, laser (e.g. LiDAR) sensors, time-of-flight sensors, and optical recognition means such as cameras and/or 3D imaging technology. For example, the dispenser and method may use a combination of ultrasonic sensors and optical recognition means.

### Examples

### Dispenser rig

A dispenser 10 rig was assembled as illustrated in Figure 1. The dispenser 10 comprised three lateral ultrasonic sensors 16, 18 and 20, and an upper ultrasonic sensor 22 positioned directly above the support 14. The first lateral ultrasonic sensor 16 was positioned at a height of 3cm from the support 14, the second lateral ultrasonic sensor 18 was positioned at a height of 7.5cm from the support 14 on the opposite side of the dispenser housing 11 to the first lateral ultrasonic sensor 16, and the third lateral ultrasonic sensor 20 was positioned above the first lateral ultrasonic sensor 16 at a height of 10.5cm from the support 14. The upper ultrasonic sensor 22 was positioned directly above the support 14 at a height of 23cm. The sensors were HC-SR04 ultrasonic ranging modules, which are widely commercially available. The ultrasonic sensors 16, 18, 20, 22 were each connected to an appropriately programmed controller and the measurements outputted as a frequency of 40Hz.

### Glass types and identification

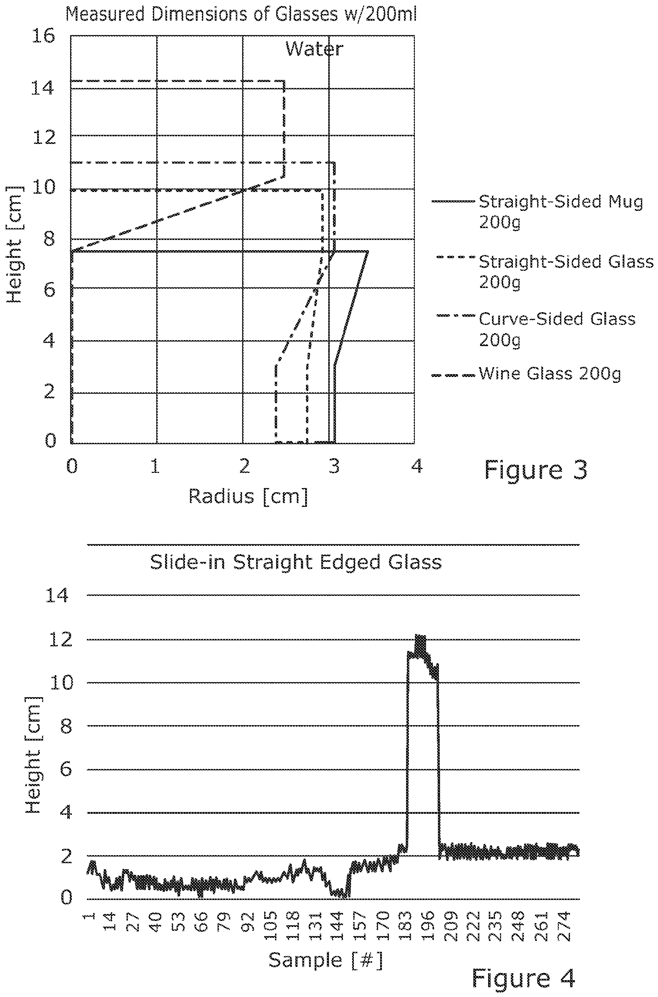

Four glass types were selected for identification: a straight sided standard glass, a curved glass of approximately the same height as the straight glass, a shorter mug/tumbler, and a wine glass having pronounced curvature and a stem. Each glass was filled with 200ml water and positioned in the centre of the support 14. The radii were calculated by subtracting the measured values from the distance to the centre of the support. The measurements were then plotted to visualise how each glass was represented in the controller software, and the results are shown in Figure 3. As shown in Figure 3, the measured radii strongly resemble the true glasses.

### Volume measurement - filled glasses

The radii of the straight sided and curved glasses were measured, and all significant radii averaged so each glass is represented as a plain cylinder of calculated average radius and measured water height. A radius was considered significant if it was larger than 1.5cm. The volume of the glass is then calculated using the formula for the volume of a cylinder. The water level and radius values were then modified by representative wall and base thickness values. The volume calculation for the straight sided standard glass was 3% above the measured volume, and that for the curved glass was 7% above the measured volume. Accurate volume calculations including wall and base thickness assumptions can be achieved through a learning phase in which data is collected on a large set of representative glasses, with machine learning techniques employed based upon glass geometry.

Next, 250ml of water was placed in each glass to ensure that the base thickness values for the glasses were optimised around one cup of water. The percentage error for the calculated volume for the straight sided and curved glasses with representative wall and base thickness values (0.2cm and 2cm respectively) were both 6% above the measured volumes. With the actual glass thicknesses included, the error margin for the straight sided glass was 0% and that for the curved glass 2% above the measured volume. A mug/tumbler was also tested, and with a measured glass thickness the calculated volume was 7% above the measured volume.

### Volume measurement - empty glasses

In these tests, a dispenser rig as described above was used incorporating a reflector plate for the upper ultrasonic sensor, as illustrated in Figures 2a and 2b. The reflector plate was angled at 45° to orthogonally reflect the ultrasonic waves.

The total available volume of a glass was calculated through two different methods: direct measurement of the edge of the glass, and a "slide-in" method in which an empty glass was slid into position. A plot of slide-in data for a straight sided glass is shown in Figure 4, in which the edge of the glass is clearly visible before the plot settles back to the level of the base of the glass.

The maximum volume of the glass was measured by filling the glass with water until full, then weighing the glass. The same volume average radius, base thickness and wall assumptions as discussed above for the filled glasses were applied for the empty glasses. For direct measurement, the error margin for the calculated volumes of the straight sided and curved glasses were respectively 7% and 1% below the measured volumes. For the slide-in measurement, the error margin for the calculated volumes of the straight sided and curved glasses were respectively 17% below and 7% above the measured volumes. Thus, the results for the direct measurement were slightly more accurate than those for the slide in measurement, which may be due to variations in user behaviour for the latter.

It will be understood that the embodiments illustrated herein show features and applications of the invention only for the purposes of illustration. In practice the invention may be applied to many different configurations, the detailed embodiments being straightforward for those skilled in the art to implement.

## Claims

1. A dispenser for dispensing a material into a receptacle, the dispenser comprising
a dispenser outlet for dispensing material into the receptacle;
a support for receiving a receptacle;
at least one lateral sensor positioned to laterally sense a receptacle received on the support;
an upper sensor positioned to sense a receptacle received on the support from above; and
a controller operatively connected to the lateral and upper sensors and configured to sense the presence of a receptacle received on the support, calculate the volume of the receptacle and/or the volume of material within the receptacle from data received from the lateral and upper sensors, and control the volume of material dispensed from the dispenser outlet into the receptacle based upon the calculated volume of the receptacle and/or the volume of material within the receptacle;
wherein the dispenser comprises user input means through which a user can make selections regarding the material to be dispensed, and is configured to be able to add an additive to a receptable pre-filled with material, wherein the amount of additive to be dispensed is calculated in accordance with the user selection and the calculated volume of material within the receptable; and
wherein the lateral and upper sensors comprise ultrasonic sensors.

2. A dispenser according to claim 1 which comprises a single lateral sensor, and wherein the support means comprises positioning means for positioning a receptacle received on the support.

3. A dispenser according to claim 1 or 2 which comprises two, three, four, five, six or more lateral sensors.

4. A dispenser according to any preceding claim wherein the lateral sensors are spaced apart in different positions along the X, Y and/or Z Cartesian axes relative to the support.

5. A dispenser according to any preceding claim wherein at least two lateral sensors are positioned opposite each other on either side of the support at different heights from the support.

6. A dispenser according to any preceding claim which has a single upper sensor.

7. A dispenser according to any preceding claim wherein the lateral and/or upper sensors further comprise optical recognition means.

8. A dispenser according to any preceding claim wherein the ultrasonic sensor(s) is configured to detect the first echo and/or the first and second echoes.

9. A dispenser according to any preceding claim wherein the controller is configured to control the amount of material being dispensed from the dispenser as a time based flow rate calculation or a volumetric flow rate calculation; and/or wherein the dispenser is configured to dispense material at a fixed flow rate; and/or wherein the dispenser comprises a flow rate monitor to monitor the flow rate of material being dispensed.

10. A dispenser according to any preceding claim wherein the controller comprises a computer having a programmable memory, which is capable of receiving instructions from a user; and/or the dispenser comprises a user input means, through which a user can input selections regarding the material they wish to be dispensed.

11. A dispenser according to any preceding claim wherein the controller is configured to calculate the volume of a receptacle received by the support and control the dispenser to dispense a volume of material from the dispenser up to a pre-determined fill maximum.

12. A dispenser according to any preceding claim which comprises optical recognition means to provide data regarding the positioning of a receptacle on the support.

13. A method of dispensing a material from a dispenser into a receptacle, the method comprising the steps of:
receiving the receptacle on a support;
sensing the receptacle laterally using at least one lateral sensor positioned laterally of the support;
sensing the receptacle from above using an upper sensor positioned above the support;
sensing the presence of the receptacle, and calculating the volume of the receptacle and/or the volume of material within the receptacle from data received from the lateral and upper sensors;
receiving instructions from a user through a user input means regarding the material to be dispensed, wherein the material to be dispensed may comprise an additive to be added to a receptacle pre-filled with material, wherein the amount of additive to be dispensed is calculated in accordance with the user selection and the calculated volume of material within the receptacle;
and
dispensing material into the receptacle based upon the calculated volume of the receptacle and/or the volume of material within the receptacle;
wherein the lateral and/or upper sensors sense the receptacle on the support by transmitting and receiving ultrasonic sound waves.

14. A method according to claim 13 wherein the lateral and/or upper sensors sense the receptacle on the support by further using optical recognition means.

15. A method according to claim 13 or 14 wherein if no receptacle is sensed on the support then a controller prevents any material being dispensed by the dispenser; and/or if the dispenser senses that the receptacle is offset from the centre of the support by an amount which exceeds a threshold value then it prevents any material being dispensed.

## Patentansprüche

1. Eine Ausgabevorrichtung für das Ausgeben eines Materials in einen Behälter, die Ausgabevorrichtung umfassend:
Einen Ausgabeauslass zum Ausgeben von Material in den Behälter;
eine Halterung zum Aufnehmen eines Behälters;
mindestens einen seitlichen Sensor, der so positioniert ist, dass er einen in die Halterung aufgenommenen Behälter seitlich abtastet;
einen oberen Sensor, der so positioniert ist, dass er einen in die Halterung aufgenommenen Behälter von oben abtastet; und
eine Steuereinheit, die betriebsbereit mit dem seitlichen und oberen Sensor verbunden und konfiguriert ist, das Vorhandensein eines in die Halterung aufgenommenen Behälters zu erfassen, das Volumen des Behälters und/oder das Volumen des Materials innerhalb des Behälters aus den Daten zu berechnen, die von dem seitlichen und oberen Sensor empfangen wurden, und Steuern des Volumens des aus dem Ausgabeauslass in den Behälter ausgegebenen Materials, basierend auf dem berechneten Volumen des Behälters und/oder des Volumens des Materials in dem Behälter;
wobei die Ausgabevorrichtung eine Benutzereingabevorrichtung umfasst, über die ein Benutzer eine Auswahl hinsichtlich des auszugebenden Materials treffen kann, und die so konfiguriert ist, dass sie einem mit einem Material vorgefüllten Behälter einen Zusatz hinzufügen kann, wobei die Menge des auszugebenden Zusatzes gemäß der Benutzerauswahl und dem berechneten Volumen des Materials in dem Behälter berechnet wird; und
wobei der seitliche und obere Sensor Ultraschallsensoren umfassen.

2. Ausgabevorrichtung nach Anspruch 1, die einen einzelnen seitlichen Sensor umfasst, und wobei die Haltevorrichtung eine Positionierungsvorrichtung für das Positionieren des in die Halterung aufgenommenen Behälters umfasst.

3. Ausgabevorrichtung nach Anspruch 1 oder 2, die zwei, drei, vier, fünf, sechs oder mehr seitliche Sensoren umfasst.

4. Ausgabevorrichtung nach einem der vorstehenden Ansprüche, wobei die seitlichen Sensoren in verschiedenen Positionen entlang der kartesischen X-, Y- und/oder Z-Achse im Verhältnis zu der Halterung beabstandet sind.

5. Ausgabevorrichtung nach einem der vorstehenden Ansprüche, wobei mindestens zwei seitliche Sensoren auf jeder Seite der Halterung gegenüberliegend in unterschiedlichen Höhen von der Halterung positioniert sind.

6. Ausgabevorrichtung nach einem der vorstehenden Ansprüche, der einen einzelnen oberen Sensor aufweist.

7. Ausgabevorrichtung nach einem der vorstehenden Ansprüche, wobei der seitliche und/oder obere Sensor ferner optische Erkennungsvorrichtungen umfassen.

8. Ausgabevorrichtung nach einem der vorstehenden Ansprüche, wobei der/die Ultraschallsensor(en) konfiguriert ist/sind, das erste Echo und/oder das erste und zweite Echo zu erfassen.

9. Ausgabevorrichtung nach einem der vorstehenden Ansprüche, wobei die Steuereinheit konfiguriert ist, die Menge des aus der Ausgabevorrichtung auszugebenden Materials als eine zeitbasierte Durchflussraten-Berechnung oder eine volumetrische Durchflussraten-Berechnung zu steuern; und/oder wobei die Ausgabevorrichtung konfiguriert ist, Material in einer festgelegten Durchflussrate auszugeben; und/oder wobei die Ausgabevorrichtung ein Durchflussraten-Überwachungsgerät umfasst, um die Durchflussrate des auszugebenden Materials zu überwachen.

10. Ausgabevorrichtung nach einem der vorstehenden Ansprüche, wobei die Steuerung einen Computer mit einem programmierbaren Speicher umfasst, der in der Lage ist, Anweisungen von einem Benutzer zu empfangen; und/oder die Ausgabevorrichtung umfasst eine Benutzereingabevorrichtung, über die ein Benutzer eine Auswahl hinsichtlich des Materials, das er ausgegeben haben möchte, eingeben kann.

11. Ausgabevorrichtung nach einem der vorstehenden Ansprüche, wobei die Steuereinheit konfiguriert ist, das Volumen eines in die Halterung aufgenommenen Behälters zu berechnen und die Ausgabevorrichtung zu steuern, um ein Volumen eines Materials aus der Ausgabevorrichtung bis zu einer vorbestimmten maximalen Füllmenge auszugeben.

12. Ausgabevorrichtung nach einem der vorstehenden Ansprüche, die eine optische Erkennungsvorrichtung umfasst, um Daten hinsichtlich der Positionierung eines Behälters in der Halterung bereitzustellen.

13. Verfahren zum Ausgeben eines Materials aus einer Ausgabevorrichtung in einen Behälter, das Verfahren die folgenden Schritte umfassend:
Aufnehmen des Behälters in einer Halterung;
seitliches Abtasten des Behälters unter Einsatz mindestens eines seitlichen Sensors, der seitlich von der Halterung positioniert ist;
Abtasten des Behälters von oben über einen oberen Sensor, der über der Halterung positioniert ist;
Abtasten auf Vorhandensein des Behälters und Berechnen des Volumens des Behälters und/oder des Volumens des Materials innerhalb des Behälters aus den von dem seitlichen und oberen Sensor empfangenen Daten;
Empfangen von Anweisungen von einem Benutzer über eine Benutzereingabevorrichtung hinsichtlich des auszugebenden Materials, wobei das auszugebende Material einen Zusatz umfassen kann, der einem mit einem Material vorgefüllten Behälter hinzugefügt wird, wobei die Menge des auszugebenden Zusatzes gemäß der Benutzerauswahl und dem berechneten Volumen des Materials in dem Behälter berechnet wird; und
Ausgeben von Material in den Behälter, basierend auf dem berechneten Volumen des Behälters und/oder des Volumens des Materials innerhalb des Behälters;
wobei der seitliche und/oder obere Sensor den Behälter in der Halterung durch Ausstrahlen und Empfangen von Ultraschallwellen abtastet.

14. Verfahren nach Anspruch 13, wobei der seitliche und/oder obere Sensor den Behälter in der Halterung ferner durch die Verwendung einer optischen Erkennungsvorrichtung abtastet.

15. Verfahren nach Anspruch 13 oder 14, wobei, wenn kein Behälter in der Halterung erfasst wird, eine Steuereinheit verhindert, dass Material aus der Ausgabevorrichtung ausgegeben wird; und/oder wenn die Ausgabevorrichtung erfasst, dass der Behälter von der Mitte der Halterung um einen Betrag versetzt ist, der einen Schwellenwert überschreitet, die Steuereinheit verhindert, dass Material ausgegeben wird.

## Revendications

1. Distributeur destiné à distribuer un matériau dans un récipient, le distributeur comprenant
une sortie de distributeur destinée à distribuer le matériau dans le récipient ;
un support destiné à recevoir un récipient ;
au moins un capteur latéral positionné pour détecter latéralement un récipient reçu sur le support ;
un capteur supérieur positionné pour détecter un récipient reçu sur le support par le dessus ; et
un contrôleur connecté fonctionnellement aux capteurs latéraux et supérieur et conçu pour détecter la présence d'un récipient reçu sur le support, calculer le volume du récipient et/ou le volume de matériau à l'intérieur du récipient à partir des données reçues provenait des capteurs latéraux et supérieur, et réguler le volume de matériau distribué à partir de la sortie du distributeur dans le récipient en fonction du volume calculé du récipient et/ou du volume de matériau à l'intérieur du récipient ;
dans lequel le distributeur comprend un moyen d'entrée utilisateur par l'intermédiaire duquel un utilisateur peut effectuer des sélections concernant le matériau à distribuer, et est conçu pour pouvoir ajouter un additif à un récipient prérempli de matériau, dans lequel la quantité d'additif à distribuer étant calculée en fonction de la sélection de l'utilisateur et du volume calculé de matériau dans le récipient ; et
dans lequel les capteurs latéraux et supérieur comprennent des capteurs ultrasonores.

2. Distributeur selon la revendication 1, qui comprend un capteur latéral unique, et dans lequel le moyen de support comprend un moyen de positionnement destiné à positionner un récipient reçu sur le support.

3. Distributeur selon la revendication 1 ou 2, qui comprend deux, trois, quatre, cinq, six capteurs latéraux ou plus.

4. Distributeur selon une quelconque revendication précédente, dans lequel les capteurs latéraux sont espacés dans différentes positions le long des axes cartésiens X, Y et/ou Z par rapport au support.

5. Distributeur selon une quelconque revendication précédente, dans lequel au moins deux capteurs latéraux sont positionnés à l'opposé l'un de l'autre de part et d'autre du support à des hauteurs différentes du support.

6. Distributeur selon une quelconque revendication précédente, qui présente un capteur supérieur unique.

7. Distributeur selon une quelconque revendication précédente, dans lequel les capteurs latéraux et/ou supérieur comprennent en outre un moyen de reconnaissance optique.

8. Distributeur selon une quelconque revendication précédente, dans lequel le ou les capteurs ultrasonores sont conçus pour détecter le premier écho et/ou les premier et second échos.

9. Distributeur selon une quelconque revendication précédente, dans lequel le contrôleur est configuré pour contrôler la quantité de matériau distribué à partir du distributeur en tant que calcul de débit en fonction du temps ou calcul de débit volumétrique ; et/ou dans lequel le distributeur est conçu pour distribuer le matériau à un débit fixe ; et/ou dans lequel le distributeur comprend un contrôleur de débit pour surveiller le débit de matériau distribué.

10. Distributeur selon une quelconque revendication précédente, dans lequel le contrôleur comprend un ordinateur présentant une mémoire programmable, qui peut recevoir des instructions provenant d'un utilisateur ; et/ou le distributeur comprend un moyen d'entrée d'utilisateur, par l'intermédiaire duquel un utilisateur peut entrer des sélections concernant le matériau qu'il souhaite être distribué.

11. Distributeur selon une quelconque revendication précédente, dans lequel le contrôleur est configuré pour calculer le volume d'un récipient reçu par le support et commander le distributeur pour distribuer un volume de matériau à partir du distributeur jusqu'à un maximum de remplissage prédéfini.

12. Distributeur selon une quelconque revendication précédente, qui comprend n moyen de reconnaissance optique pour fournir des données concernant le positionnement d'un récipient sur le support.

13. Procédé de distribution d'un matériau à partir d'un distributeur dans un récipient, le procédé comprenant les étapes suivantes :
la réception du récipient sur un support ;
la détection latérale du récipient à l'aide d'au moins un capteur latéral placé latéralement par rapport au support ;
la détection du récipient par le haut à l'aide d'un capteur supérieur placé au-dessus du support ;
la détection de la présence du récipient et le calcul le volume du récipient et/ou le volume de matériau à l'intérieur du récipient à partir des données reçues des capteurs latéraux et supérieur ;
la réception d'instructions provenant d'un utilisateur par l'intermédiaire d'un moyen d'entrée utilisateur concernant le matériau à distribuer, et dans lequel e matériau à distribuer peut comprendre un additif à ajouter à un récipient prérempli de matériau, dans lequel la quantité d'additif à distribuer est calculée en fonction de la sélection de l'utilisateur et du volume calculé de matériau dans le récipient ; et
la distribution du matériau dans le récipient en fonction du volume calculé du récipient et/ou du volume de matériau à l'intérieur du récipient ;
dans lequel les capteurs latéraux et/ou supérieurs détectent le récipient sur le support en émettant et en recevant des ondes sonores ultrasonores.

14. Procédé selon la revendication 13, dans lequel les capteurs latéraux et/ou supérieur détectent le récipient sur le support en utilisant en outre un moyen de reconnaissance optique.

15. Procédé selon la revendication 13 ou 14, dans lequel si aucun récipient n'est détecté sur le support, alors un contrôleur empêche tout matériau d'être distribué par le distributeur ; et/ou si le distributeur détecte que le récipient est décalé par rapport au centre du support d'une quantité qui dépasse une valeur de seuil, alors il empêche tout matériau d'être distribué.
